(19) Europäisches Patentamt
European Patent Office
Office européen des brevets

(11) **EP 1 865 613 B1**

(12) **FASCICULE DE BREVET EUROPEEN**

(45) Date de publication et mention
de la délivrance du brevet:
**17.03.2010 Bulletin 2010/11**

(51) Int Cl.:
***H04B 1/69*** *(2006.01)*

(21) Numéro de dépôt: **07109489.0**

(22) Date de dépôt: **04.06.2007**

(54) **Système de communication UWB coopératif de type cohérent**

UWB kooperatives kohärentes Nachrichtentechniksystem

UWB cooperative coherent communication system

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **06.06.2006 FR 0652034**

(43) Date de publication de la demande:
**12.12.2007 Bulletin 2007/50**

(73) Titulaire: **COMMISSARIAT A L'ENERGIE ATOMIQUE**
**75015 Paris (FR)**

(72) Inventeur: **Abou Rjeily, Chadi**
**c/o COMMISSARIAT A L'ENERGIE ATOMIQUE**
**38054, GRENOBLE CEDEX 9 (FR)**

(74) Mandataire: **Poulin, Gérard et al**
**Brevatome**
**3, rue du Docteur Lancereaux**
**75008 Paris (FR)**

(56) Documents cités:
• **SHENG YANG ET AL: "Optimal Space-Time Codes for the MIMO Amplify-and-Forward Cooperative Channel" COMMUNICATIONS, 2006 INTERNATIONAL ZURICH SEMINAR ON ZURICH, SWITZERLAND FEBRUARY 22-24, 2006, PISCATAWAY, NJ, USA,IEEE, 22 février 2006 (2006-02-22), pages 122-125, XP010924253 ISBN: 1-4244-0092-9**
• **ABOU-RJEILY C ET AL: "Space-Time Coding for Multiuser Ultra-Wideband Communications" INTERNET CITATION, [Online] 13 septembre 2005 (2005-09-13), XP002407955 Extrait de l'Internet: URL:http://www.comelec.enst.fr/ belfiore/UWB_MIMO.pdf> [extrait le 2006-11-16]**
• **SHARMA G V V ET AL: "Diversity Gain Using a Repeater in a Wireless Personal Area Network" VEHICULAR TECHNOLOGY CONFERENCE, 2005. VTC 2005-SPRING. 2005 IEEE 61ST STOCKHOLM, SWEDEN 30-01 MAY 2005, PISCATAWAY, NJ, USA,IEEE, 30 mai 2005 (2005-05-30), pages 1519-1522, XP010855676 ISBN: 0-7803-8887-9**
• **THOMAS J: "Efficient distributed signaling schemes for cooperative wireless networks" VEHICULAR TECHNOLOGY CONFERENCE, 2004. VTC2004-FALL. 2004 IEEE 60TH LOS ANGELES, CA, USA 26-29 SEPT. 2004, PISCATAWAY, NJ, USA,IEEE, 26 septembre 2004 (2004-09-26), pages 1018-1022, XP010786776 ISBN: 0-7803-8521-7**

**Description**

**DOMAINE TECHNIQUE**

La présente invention concerne à la fois le domaine des télécommunications en ultra-large bande ou UWB *(Ultra Wide Band)* et celui des systèmes de télécommunication coopératifs.

**ÉTAT DE LA TECHNIQUE ANTÉRIEURE**

Les systèmes de télécommunication UWB ont fait l'objet de recherches considérables ces dernières années. Ces systèmes ont pour spécificité de travailler directement en bande de base sur des signaux dits ultra-large bande. On entend généralement par signal UWB un signal conforme au masque spectral stipulé dans la réglementation du FCC du 14 Février 2002, révisée en Mars 2005, c'est-à-dire pour l'essentiel un signal dans la bande spectrale 3,1 à 10,6 GHz et présentant une largeur de bande d'au moins 500 MHz à -10dB. Les signaux UWB se divisent en deux catégories : les signaux multi-bande OFDM (MB-OFDM) et les signaux UWB de type impulsionnel. Un signal UWB impulsionnel est constitué d'impulsions très courtes, de l'ordre de quelques centaines de picosecondes à la nanoseconde. Par la suite, nous nous limiterons aux systèmes UWB impulsionnels.

Les systèmes UWB sont de bons candidats pour les réseaux personnels sans fil (WPAN). Dans un réseau sans fil classique, comme un réseau de télécommunication cellulaire, les liaisons sont établies entre un émetteur et un récepteur, sans participation de terminaux tiers. Afin d'améliorer la couverture spatiale des réseaux sans fil, des architectures ad-hoc mettant en oeuvre des stratégies de coopération entre terminaux ont été proposées.

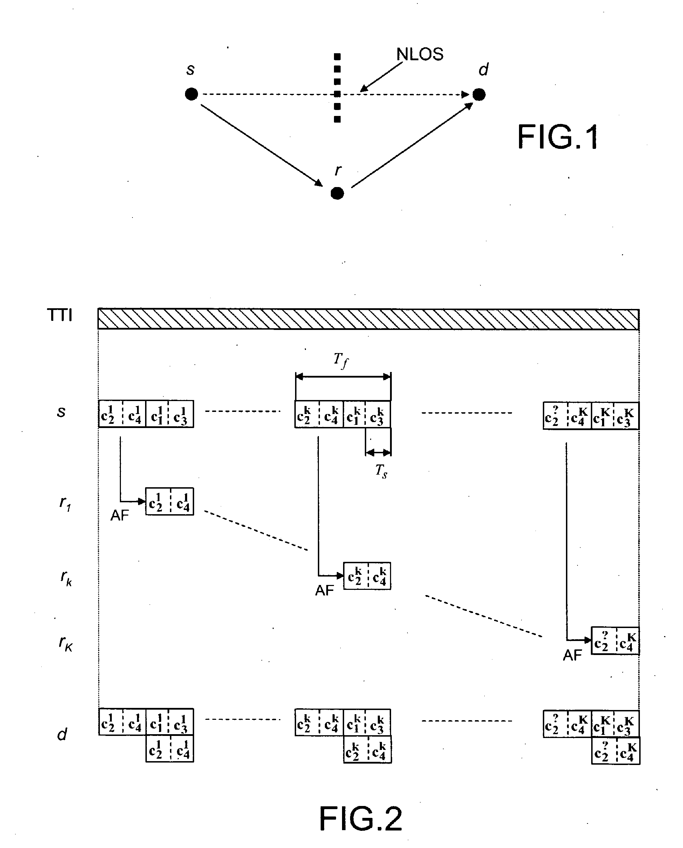

La Fig. 1 représente de manière très schématique une stratégie de coopération au sein d'un tel réseau. Le terminal source s transmet un flux de données à un terminal destinataire *d.* Le terminal *r* reçoit également le flux de données issu de s et le relaie au terminal destinataire *d.* Le terminal *r* coopère ainsi à la transmission de données entre **s** et **d**. Par exemple, si le canal *s - d* est de mauvaise qualité, notamment à cause de la présence d'un obstacle entre *s* et *d,* le canal *s - r - d* peut permettre de le contourner et d'obtenir une qualité de liaison satisfaisante. Le flux de données peut être relayé par plusieurs terminaux pour augmenter davantage la diversité spatiale des trajets de transmission. En outre, il peut être relayé en une seule fois *(single-hop)* ou en plusieurs fois consécutives *(multiple-hop).*

Comme on le sait, dans un réseau sans fil de type TDMA, chaque terminal possède un intervalle de transmission qui lui est dédié. On distingue alors deux modes de coopération : la coopération parallèle et la coopération série.

Dans un mode de coopération parallèle, le terminal relais reçoit les données du terminal source pendant l'intervalle de transmission alloué à ce dernier et les retransmet vers le terminal destinataire durant son propre intervalle de transmission. Le terminal destinataire reçoit ainsi les mêmes données, via des trajets de routage différents, une première fois pendant l'intervalle de transmission du terminal source et une seconde fois pendant l'intervalle de transmission du terminal relais. Bien que le qualificatif de parallèle puisse paraître mal choisi du fait de la réception séquentielle des données par le terminal destinataire, il signifie en fait l'absence d'interférence entre les deux trajets de routage, résultant de la séparation temporelle des intervalles de transmission du terminal source et du terminal relais. Le fonctionnement en mode de coopération parallèle suppose que le terminal relais n'ait pas de données propres à transmettre pendant son intervalle de transmission. Cela réduit considérablement les configurations de coopération.

Dans un mode de coopération série, le terminal relais reçoit et retransmet les données du terminal source pendant l'intervalle de transmission alloué à ce dernier. Pour ce faire, il peut se contenter de retransmettre, après amplification, le signal reçu (protocole dit AF pour *Amplify and Forward)* ou bien décoder préalablement le signal avant de réémettre (protocole dit *Decode and Forward).* Le terminal destinataire reçoit les données du terminal source, via des trajets de routage différents, pendant l'intervalle de transmission alloué au terminal source.

Un système coopératif utilisant notamment un protocole AF est décrit dans l'article de K. Azariam et al. intitulé « On the achievable diversity-multiplexing tradeoff in half-duplex cooperative channels » publié dans IEEE Trans. on Information Theory, Vol. 51, N° 12, Déc. 2005, pages 4152-4172.

Du fait de la transmission simultanée de données par le terminal source et de données de ce même terminal relayées par le terminal relais, les données doivent être codées pour assurer leur orthogonalité. Ce code est dénommé code spatio-temporel distribué ou DSTC *(Distributed Space Time Code).*

Les systèmes de télécommunication de type coopératifs sont, comme les systèmes multi-antenne dits MIMO *(Multiple In Multiple Out),* des systèmes à diversité spatiale de transmission. Le type de détection utilisée dans le récepteur dépend de l'information disponible sur le canal. On distingue :

- les systèmes dits cohérents, dans lesquels le récepteur connaît les caractéristiques du canal de transmission, typiquement grâce à une estimation de canal faite à partir de symboles pilotes transmis par l'émetteur. L'estimation de canal est ensuite utilisée pour la détection de symboles d'information. Les systèmes cohérents sont généralement destinés à des applications à haut débit ;

- les systèmes non cohérents, dans lesquels le récepteur effectue une détection à l'aveugle des symboles d'information, sans connaissance préalable des caractéristiques du canal de transmission ;
- les systèmes différentiels, dans lesquels les symboles d'information sont codés sous forme de différence de phase ou d'amplitude sur deux symboles de transmission consécutifs. Ces systèmes peuvent ne pas nécessiter une connaissance du canal du côté récepteur.

Un premier exemple de système coopératif cohérent utilisant un protocole AF est connu de l'article de S. Yang et J-C Belfiore intitulé « Optimal space-time codes for the MIMO amplify-and-forward cooperative channel » disponible sur le site www.comelec.enst.fr. Cet article propose en outre une généralisation du système coopératif de l'article de K. Azariam au cas où les sources, relais et destination sont de type multi-antenne. Le système qui y est décrit présente un gain de codage élevé, et donc de bonnes performances en termes de BER. Cependant il n'est pas applicable à des signaux UWB. En effet, le système en question utilise des codes DSTC à coefficients complexes qui portent donc une information de phase. Or, étant donné la très courte durée des impulsions utilisées et par conséquent la largeur de bande des signaux UWB, il est excessivement difficile d'en extraire une information de phase.

Un second exemple de système coopératif cohérent utilisant un protocole AF est connu de l'article de C. Abou-Rjeily et al. intitulé « Distributed algebraic space time codes for ultra wideband communications », soumis à publication, édition Kluwer. A la différence du premier, ce système utilise des signaux UWB et des coefficients de codes DSTC réels. Toutefois ses performances en termes de BER sont inférieures à celles du système précédent.

L'article "Space-time coding for multiuser Ultra wideband Communications" de C. Abou-Ryeily et al. présente des codes "space-time" à coefficients réels pour des systèmes UWB.

L'objectif de l'invention est de proposer un système coopératif cohérent, utilisant des signaux UWB tout en présentant un gain de codage plus élevé que celui de l'art antérieur.

## EXPOSÉ DE L'INVENTION

La présente invention est définie par un procédé de codage spatio-temporel distribué pour système de télécommunication UWB impulsionnel dans lequel un terminal source transmet un signal à un terminal destinataire pendant un intervalle de transmission constitué de $K$ trames, $K \geq 1$ chaque trame étant divisée en une première et une seconde demi-trames, le signal transmis dans chaque première demi-trame étant reçu puis retransmis après amplification pendant la seconde demi-trame suivante par un terminal relais distinct parmi $K$ terminaux relais dudit système. Ledit terminal source code 4K symboles d'information appartenant à un alphabet de modulation PPM ou un alphabet de modulation composite PPM-PAM comprenant une pluralité de positions temporelles, pour fournir une séquence de quatre symboles de transmission par trame, lesdits symboles de transmission étant obtenus à partir de $4K$ combinaisons linéaires desdits symboles d'information à l'aide d'une pluralité de coefficients appartenant à une extension algébrique réelle d'ordre $2K$ du corps des rationnels et, pour un desdits symboles de transmission de rang déterminé dans ladite séquence de chaque trame, d'une permutation de ses composantes PPM. Les symboles de transmission ainsi obtenus modulent un signal UWB impulsionnel.

L'invention est également définie par un dispositif de codage pour terminal de télécommunication UWB impulsionnel destiné à transmettre un signal à un terminal destinataire pendant un intervalle de transmission (TTI) constitué de $K$ trames, $K \geq 1$, ledit dispositif de codage comprenant :

- des premiers moyens de distribution pour fournir $4K$ symboles d'information appartenant à un alphabet de modulation composite PPM-PAM comprenant $M$ positions temporelles, à $K$ modules de codage en parallèle, chaque module de codage correspondant à une trame et opérant sur lesdits $4K$ symboles d'information pour fournir quatre symboles de transmission;

- des seconds moyens de distribution pour fournir à chaque module de codage un ensemble de $4K$ coefficients

  ( $\mathbf{V^K, V_1^K}$ ) appartenant à une extension algébrique réelle du corps des nombres rationnels ;

- chaque module de codage étant adapté à effectuer une combinaison linéaire desdits $4K$ symboles d'information au moyen des $4K$ coefficients qu'il reçoit et à effectuer une permutation des composantes PPM de l'un des symboles obtenus par combinaison ;
- une pluralité de lignes de retard montées en série, chacune appliquant un retard égal à la durée trame et recevant sur son entrée la sortie d'un module de codage.

## BRÈVE DESCRIPTION DES DESSINS

D'autres caractéristiques et avantages de l'invention apparaîtront à la lecture d'un mode de réalisation préférentiel de l'invention fait en référence aux figures jointes parmi lesquelles :

la Fig. 1 illustre schématiquement une stratégie de coopération dans un réseau sans fil ;
la Fig. 2 illustre schématiquement un protocole de coopération selon un mode préférentiel de réalisation utilisant une pluralité de terminaux relais;
la Fig. 3 représente un exemple d'alphabet de modulation de type PPM-PAM ;
la Fig. 4 illustre le choix de terminaux relais par concertation entre un terminal source et un terminal destinataire ;
la Fig. 5 illustre schématiquement la structure générale d'un terminal source selon un mode de réalisation de l'invention ;
la Fig. 6 illustre schématiquement un module du terminal source représenté en Fig. 5 ;
la Fig. 7 illustre schématiquement un premier sous-module du module représenté en Fig. 6 ;
la Fig. 8 illustre schématiquement un second sous-module du module représenté en Fig. 6.

## EXPOSÉ DÉTAILLÉ DE MODES DE RÉALISATION PARTICULIERS

L'idée à la base de l'invention est d'utiliser une stratégie de coopération utilisant des signaux UWB impulsionnels modulés par une modulation de position et d'amplitude ou PPM-PAM *(Pulse Position Modulation & Pulse Amplitude Modulation)* et à veiller à maintenir l'orthogonalité entre le signal à relayer et le signal relayé au moyen d'un type de codage spécifique.

La stratégie de coopération utilisée est de type AF comme illustré en Fig. 2. On considère, dans le cas présent un terminal source $s$, $K$ terminaux relais $r_1, r_2, ..., r_K$ avec $K \geq 1$, et un terminal destinataire $d$. L'intervalle de transmission noté TTI est alloué au terminal source s. Autrement dit, pendant cette fenêtre temporelle, seul le terminal source s peut émettre, les relais $r_1, r_2, ..., r_K$ se bornant à relayer le signal émis par le terminal source.

Le signal émis par le terminal source dans la fenêtre TTI est constitué d'une séquence de $K$ trames, chacune étant de durée $T_f$ et constituée de deux demi-trames. Si l'on considère par exemple la $k^{ième}$ trame de la séquence, sa première demi-trame est relayée par le terminal relais $r_k$ pendant que la source émet sa seconde demi-trame. Ainsi la première demi-trame de chaque trame de la séquence est relayée par un terminal relais différent.

Un intervalle de transmission TTI permet de transmettre $4K$ symboles d'information, chacune des $K$ trames offrant une diversité spatiale de 2 (terminaux source et relais). Plus précisément, $4K$ symboles d'information notés $s_1$, $s_2,...,s_{4K}$ sont codés en $4K$ symboles de transmission $c_1^k, c_2^k, c_3^k, c_4^k$, $k = 1,.., K$, le code étant non dégénéré et de rang $4K$.

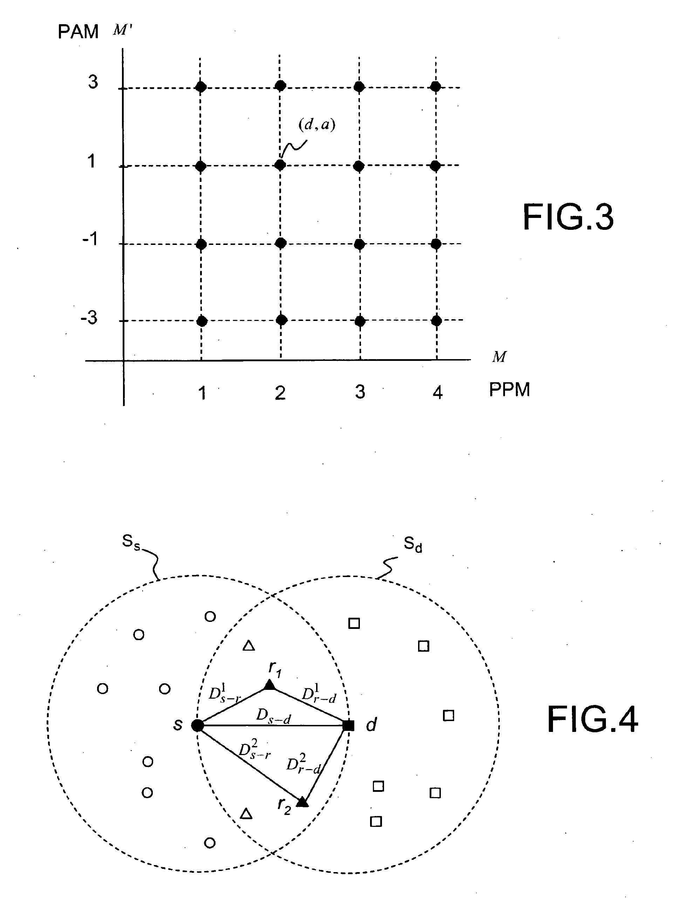

Les symboles d'information $s_1, s_2, ..., s_{4K}$ sont des éléments d'un alphabet de modulation $M$-PPM-$M'$-PAM ou de modulation $M$-PPM, ce dernier alphabet considéré pour les besoins de la description comme un cas particulier du premier avec $M'=1$. L'alphabet de cette modulation de cardinal $M.M'$ a été représenté schématiquement en Fig. 3. Pour chacune des $M$ positions temporelles, $M'$ amplitudes de modulation sont possibles. Un symbole de l'alphabet peut être représenté par un vecteur $a=(a_1,...,a_M)^T$ de dimension M avec $a_m = \delta(m\text{-}d)a$ où $d$ est une position de la modulation PPM et $a$ une amplitude de la modulation PAM et $\delta(.)$ est la distribution de Dirac. Ainsi les symboles d'information seront-ils considérés dans la suite comme des vecteurs de $M$ composantes PPM dont une seule est non nulle et égale à un élément de l'alphabet PAM.

Revenant à la Fig. 2, on remarque que le terminal source transmet les symboles $c_2^k, c_4^k$ pendant la première demi-trame de la $k^{ième}$ trame puis les symboles $c_1^k, c_3^k$ pendant la seconde demi-trame. Le terminal relais $r_k$ reçoit les symboles $c_2^k, c_4^k$ pendant la première demi-trame et les retransmet pendant la seconde demi-trame. Ainsi, pendant la seconde demi-trame, en négligeant aux temps de propagation près, le terminal destinataire reçoit quatre symboles de transmission que l'on peut représenter sous la forme d'une matrice de code spatio-temporel $C^k$ de dimension $2M \times 2$ :

$$\mathbf{C^k} = \begin{pmatrix} \mathbf{c_1^k} & \mathbf{c_2^k} \\ \mathbf{c_3^k} & \mathbf{c_4^k} \end{pmatrix} \qquad (1)$$

La dimension temporelle est donnée par les différentes lignes de la matrice (direction verticale) et la dimension spatiale (terminal source et terminal relais) est donnée par les différentes colonnes (direction horizontale).

Selon l'invention, la matrice du code spatio-temporel $\mathbf{C^k}$ s'obtient à partir des symboles d'information $\mathbf{s_1, s_2, ...,}$ $\mathbf{s_{4K}}$, de la manière suivante :

$$\mathbf{c_1^k} = \sum_{i=1}^{K} v_i^k \mathbf{s_i} + \theta \sum_{i=1}^{K} v_i^k \mathbf{s_{K+i}} \qquad (2)$$

$$\mathbf{c_2^k} = \sum_{i=1}^{K} v_i^k \mathbf{s_{2K+i}} + \theta \sum_{i=1}^{K} v_i^k \mathbf{s_{3K+i}} \qquad (3)$$

$$\mathbf{c_3^k} = \Omega \left( \sum_{i=1}^{K} v_i^k \mathbf{s_{2K+i}} + \theta_1 \sum_{i=1}^{K} v_i^k \mathbf{s_{3K+i}} \right) \qquad (4)$$

$$\mathbf{c_4^k} = \sum_{i=1}^{K} v_i^k \mathbf{s_i} + \theta_1 \sum_{i=1}^{K} v_i^k \mathbf{s_{K+i}} \qquad (5)$$

où les coefficients $v_i^k$, $i = 1, .., K$ sont des scalaires dont nous donnerons les propriétés plus loin, $\theta$ et $\theta_1$ sont les racines conjuguées d'un polynôme $P(X)$ de degré 2, irréductible sur le corps $Q$ des rationnels et de discriminant strictement positif. Les racines $\theta$ et $\theta_1$ sont donc réelles et distinctes. Avantageusement, on prendra comme polynôme $P(X) = X^2 - X$ -1, auquel cas $\theta$ est le nombre d'or $\theta = \dfrac{1 + \sqrt{5}}{2}$ et $\theta_1 = \dfrac{1 - \sqrt{5}}{2}$.

Dans l'expression (4), $\Omega$ est une matrice de permutation (circulaire ou non), de dimension $M \times M$, ne se réduisant pas à une simple transposition. On appelle permutation toute bijection de l'ensemble ordonné $\{1, .., M\}$ sur lui-même, à l'exception de l'identité. Une permutation circulaire $\omega$ est définie par la relation $\omega(m) = m + q \pmod{M}$ où $q$ est un entier tel que $0 < q \leq M-1$. Par exemple, pour $M \geq 3$, $\Omega$ peut être un simple décalage circulaire :

$$\Omega = \begin{pmatrix} \mathbf{0}_{1 \times M-1} & 1 \\ \mathbf{I}_{M-1 \times M-1} & \mathbf{0}_{M-1 \times 1} \end{pmatrix} = \begin{pmatrix} 0 & 0 & \cdots & 0 & 1 \\ 1 & 0 & \cdots & 0 & 0 \\ 0 & 1 & 0 & \ddots & \vdots \\ \vdots & \ddots & \ddots & \ddots & 0 \\ 0 & \cdots & 0 & 1 & 0 \end{pmatrix} \qquad (6)$$

où $\mathbf{I}_{M-1 \times M-1}$ est la matrice identité de taille $M$ - 1, $\mathbf{0}_{1 \times M-1}$ est le vecteur ligne nul de taille $M$ - 1, $\mathbf{0}_{M-1 \times 1}$ le vecteur colonne nul de taille $M$ - 1 . De manière plus générale, la matrice $\Omega$ peut être celle d'une permutation associée à un changement de signe d'un quelconque ou d'une pluralité de ses éléments. Ainsi, dans le cas de l'exemple donné en (6), les matrices :

$$\Omega = \begin{pmatrix} 0 & 0 & \cdots & 0 & \chi_0 \\ \chi_1 & 0 & \cdots & 0 & 0 \\ 0 & \chi_2 & 0 & \ddots & \vdots \\ \vdots & \ddots & \ddots & \ddots & 0 \\ 0 & \cdots & 0 & \chi_{M-1} & 0 \end{pmatrix} \qquad (7)$$

avec $\chi_i = \pm 1$ peuvent être également employées dans l'expression (4). Pour $M=2$, on prendra $\Omega = \begin{pmatrix} 0 & 1 \\ -1 & 0 \end{pmatrix}$ ou

$$\Omega = \begin{pmatrix} 0 & -1 \\ 1 & 0 \end{pmatrix}.$$

On comprend à partir des expressions (2) à (5) que les symboles de transmission $\mathbf{c}_1^k, \mathbf{c}_2^k, \mathbf{c}_3^k, \mathbf{c}_4^k$ sont, comme les symboles d'information $\mathbf{s}_1 \mathbf{s}_2, ..., \mathbf{s}_{4K}$, des vecteurs de dimension $M$ dont chaque composante correspond à une position de modulation. En effet, ils sont obtenus par simple combinaison linéaire des symboles d'information et, pour $\mathbf{c}_3^k$ par une opération supplémentaire, à savoir une permutation des composantes PPM, assortie éventuellement d'une inversion de signe de certaines d'entre elles.

De manière générale, les coefficients scalaires $v_i^k$ , $i = 1, .., K$ sont des éléments d'une extension algébrique réelle (non complexe) d'ordre $K$ sur le corps $Q$ des nombres rationnels. Autrement dit, les coefficients scalaires $v_i^k$ sont les racines réelles d'un polynôme $Q^k[X]$ de degré $K$, à coefficients dans $\mathbf{Q}$ et irréductible sur $Q$. Le polynôme $Q^k[X]$ est choisi premier avec $P[X]$ et par suite les coefficients scalaires $v_i^k$ , $\theta v_i^k$ , $\theta_1 v_i^k$ intervenant dans les expressions (2) à (5) sont des éléments d'une extension algébrique itérée, également réelle, $F\colon \mathbf{Q}[\theta]$ de degré 2 sur $\mathbf{Q}[\theta]$ et par conséquent de degré $2K$ sur $\mathbf{Q}$, où $\mathbf{Q}[\theta]$ est l'extension algébrique de $\mathbf{Q}$ obtenue par adjonction de la racine $\theta$ de $P[X]$ . D'après les expressions (2) à (5) les composantes des vecteurs $\mathbf{c}_1^k, \mathbf{c}_2^k, \mathbf{c}_3^k, \mathbf{c}_4^k$ appartiennent également à l'extension algébrique F.

Les expressions (2) à (5) peuvent s'écrire sous une forme matricielle plus compacte:

$$C^k = \begin{pmatrix} \left( v^k \sigma_{12} \right)^T & \left( v^k \sigma_{34} \right)^T \\ \Omega \left( V_1^k \sigma_{34} \right)^T & \left( V_1^k \sigma_{12} \right)^T \end{pmatrix} \qquad (8)$$

où $V^k = \left( v^k, \theta v^k \right)$, $V_1^k = \left( v^k, \theta_1 v^k \right)$ avec $v^k = \left( v_1^k, v_2^k, ..., v_K^k \right)$ est défini comme le vecteur ligne des coefficients scalaires et :

$$\sigma_{12} = \left( s_1, ..., s_K, s_{K+1}, ..., s_{2K} \right)^T \quad ; \quad \sigma_{34} = \left( s_{2K+1}, ..., s_{3K}, s_{3K+1}, ..., s_{4K} \right)^T \quad ;$$

autrement dit, $\sigma_{12}$ est une matrice de dimension $2K \times M$ regroupant les **2K** premiers symboles d'information et $\sigma_{34}$ est une matrice de même dimension regroupant les **2K** symboles suivants. On rappelle que les symboles d'information sont des vecteurs colonne de dimension **M.**

Les symboles de transmission $c_1^k, c_2^k, c_3^k, c_4^k$   $k = 1,..., K$ du code spatio-temporel servent à moduler en position et en amplitude un signal UWB. Plus précisément, chaque demi-trame est divisée en deux temps symbole de durée $T_s = T_f/4$ et un symbole de transmission est émis par temps symbole. Chaque temps symbole offre $M$ positions de modulation $\tau_1, \tau_2, ..., \tau_M$ avantageusement mais non nécessairement équiréparties au sein de ce dernier. Soit **c**=($c$(1), $c$(2),...,$c$($m$))$^T$ un symbole de transmission, le signal émis par le terminal source pendant le temps symbole correspondant s'exprime alors simplement par :

$$c(t) = \sum_{m=1}^{M} c(m) w(t - \tau_m) \qquad (9)$$

où $w(t)$ est la forme élémentaire de l'impulsion UWB. Son support temporel est choisi sensiblement inférieur aux écarts $|\tau_{m+1} - \tau_m|$ entre positions de modulation successives.
Les positions de modulation sont identiques pour les symboles d'une même trame. Elles peuvent toutefois différer d'une trame à l'autre. On notera également que les positions de modulation peuvent être identiques pour tous les terminaux source, l'orthogonalité étant assurée ici par le multiplexage TDMA. Il n'est donc pas nécessaire de les séparer au moyen de séquence de sauts temporels comme dans un système TH-UWB *(Time Hopped* UWB) conventionnel ou par multiplication par des séquences orthogonales comme dans un système DS-UWB *(Direct Spread UWB).* Toutefois, la modulation par position peut servir à moduler un signal TH-UWB, DS-UWB voire un signal TH-DS-UWB, dans le cas où l'on souhaite autoriser une pluralité de terminaux source à effectuer un accès simultané pendant le même intervalle TTI. Ainsi, de manière générale le signal émis pendant un temps symbole pourra prendre la forme suivante:

$$c(t) = u(t) \otimes \sum_{m=1}^{M} c(m) \delta(t - \tau_m) \qquad (9')$$

où $u(t)$ est un signal UWB impulsionnel, par exemple TH-UWB, DS-UWB, TH-DS-UWB. Dans la suite nous nous limiterons par souci de simplification mais sans préjudice de généralisation à un signal source ayant la forme de l'expression (9).
Le terminal source s transmet lors de la seconde demi-trame de la **k**$^{ième}$ trame le signal :

$$c_1^k(t) = A_s \sum_{m=1}^{M}\sum_{i=1}^{K} v_i^k \left[s_i(m) + \theta s_{K+i}(m)\right] w(t - \tau_m) \tag{10}$$

pendant le premier temps-symbole, et

$$c_3^k(t) = A_s \sum_{m=1}^{M}\sum_{i=1}^{K} v_i^k \chi_m \left[s_{2K+i}(\omega(m)) + \theta_1 s_{3K+i}(\omega(m))\right] w(t + T_s - \tau_m) \tag{11}$$

pendant le second temps symbole, où $\omega$ est une permutation de l'ensemble ordonné $\{1,2,..,M\}$, $\chi_m = \pm 1$ et $A_s$ est un coefficient fonction de la puissance d'émission du terminal source.

Simultanément, lors de la seconde demi-trame de de la $k^{i\text{ème}}$ trame , le relais $r_k$ retransmet le signal :

$$c_2^k(t) = \alpha_k A_s h_{sr}^k \sum_{m=1}^{M}\sum_{i=1}^{K} v_i^k \left[s_{2K+i}(m) + \theta s_{3K+i}(m)\right] w(t - \tau_m) \tag{12}$$

pendant le premier temps symbole, où $h_{sr}^k$ est le coefficient d'atténuation du chemin de propagation entre le terminal source et le terminal relais $r_k$ et $\alpha_k$ est le gain d'amplification du relais $r_k$ ; et

$$c_4^k(t) = \alpha_k A_s h_{sr}^k \sum_{m=1}^{M}\sum_{i=1}^{K} v_i^k \left[s_i(m) + \theta_1 s_{K+i}(m)\right] w(t + T_s - \tau_m) \tag{13}$$

pendant le second temps symbole.

Nous donnerons ci-après les vecteurs $\mathbf{v}^k$ qui correspondent au meilleur gain de codage pour $\theta = \dfrac{1+\sqrt{5}}{2}$ et ce, pour les faibles valeurs de **K.**

Pour un seul relais, les vecteurs $\mathbf{v}^k$ se réduisent simplement à la valeur scalaire **V = 1** .

Pour deux relais, les composantes des vecteurs $\mathbf{v}^k$ sont avantageusement choisies égales à :

$$v_1^k = \frac{\sqrt{3-\phi_k}}{2} \quad \text{et} \quad v_2^k = \frac{\sqrt{3-\phi_k}}{2}\phi_k$$

avec $\phi_1 = 1+\sqrt{2}$ et $\phi_2 = 1-\sqrt{2}$

Pour trois relais, les composantes des vecteurs $\mathbf{v}^k$ sont avantageusement choisies égales à :

$$v_1^k = \frac{-2 + 2\phi_k + 3\phi_k^2}{7} \quad ; \quad v_2^k = \frac{6 + \phi_k - 2\phi_k^2}{7} \quad ; \quad v_3^k = \frac{3 - 3\phi_k - \phi_k^2}{7} \quad ;$$

avec $\phi_k = 2\cos\left(\frac{2\pi k}{7}\right)$.

Pour quatre relais, les composantes des vecteurs $\mathbf{v^k}$ sont avantageusement choisies égales à :

$$v_1^k = \sqrt{\frac{2 + 3\phi_k - \phi_k^2}{8}} \quad ; \quad v_2^k = \sqrt{\frac{2 - \phi_k}{8}} \quad ; \quad v_3^k = \sqrt{\frac{2 - 3\phi_k + \phi_k^2}{8}} \quad ; \quad v_4^k = \sqrt{\frac{2 + \phi_k}{8}}$$

avec $\phi_k = 2\cos\left(\frac{\pi k}{8}\right)$.

Enfin, pour cinq relais, les composantes des vecteurs $\mathbf{v^k}$ sont avantageusement choisies égales à :

$$v_1^k = \frac{4 + 2\phi_k + 2\phi_k^2 - \phi_k^3}{11} \quad ; \quad v_2^k = \frac{15 - 2\phi_k - 12\phi_k^2 + \phi_k^3 + 3\phi_k^4}{11} \quad ;$$

$$v_3^k = \frac{6 - 7\phi_k + 4\phi_k^2 + 2\phi_k^3 - \phi_k^4}{11} \quad ; \quad v_4^k = \frac{8 + 7\phi_k + 5\phi_k^2 - 3\phi_k^3 - 2\phi_k^4}{11} \quad ;$$

$$v_5^k = \frac{7 + \phi_k^2 + \phi_k^3}{11}$$

avec avec $\phi_k = 2\cos\left(\frac{2\pi k}{11}\right)$.

Les coefficients $v_i^k$ sont définis à un coefficient multiplicatif commun près. Des valeurs proportionnelles à ces coefficients conduisent à des performances identiques du code. Il est possible de s'écarter de cette contrainte de proportionnalité au prix d'une dégradation du gain de codage. On a pu montrer qu'un écart $\pm 10\%$ autour de la proportionnalité n'altérait pas significativement les performances du code spatio-temporel. Cette tolérance permet notamment d'opérer sur des coefficients $v_i^k$ quantifiés, par exemple des octets. Les performances du code spatio-temporel selon l'invention sont invariantes par toute permutation des coefficients $v_i^k$ opérant sur les indices $i$ ou/et $k$, autrement dit par toute permutation opérant simultanément sur les mêmes composantes des vecteurs $\mathbf{v^k}$, $k$ = 1,.., $K$ assortie d'une permutation éventuelle de ces vecteurs. Ceci se comprend aisément en observant que la première permutation est équivalente dans les expressions (2),(3),(4),(5) à une permutation de l'ordre dans lequel sont pris les symboles d'information $\mathbf{s_1}$,..,$\mathbf{s_{2K}}$ d'une part et $\mathbf{s_{2K+1}}$,..,$\mathbf{s_{4K}}$ d'autre part. La seconde permutation revient simplement à un changement de l'ordre de transmission des trames.

De surcroît, les performances de ce code sont encore invariantes par échange des éléments diagonaux et/ou antidiagonaux des matrices $\mathbf{C^k}$, c'est-à-dire par interversion dans les trames transmises des symboles $\mathbf{c_1^k}$ et $\mathbf{c_4^k}$ d'une part et/ou des symboles $\mathbf{c_2^k}$ et $\mathbf{c_3^k}$, d'autre part. Autrement dit, la séquence de symboles transmis au sein de la $k^{\text{ième}}$ trame peut être : $\mathbf{c_2^k, c_4^k, c_1^k, c_3^k}$ ou $\mathbf{c_2^k, c_1^k, c_4^k, c_3^k}$ ou $\mathbf{c_3^k, c_4^k, c_1^k, c_2^k}$ ou $\mathbf{c_3^k, c_1^k, c_4^k, c_2^k}$.

Enfin, l'interversion des racines conjuguées $\theta$ et $\theta_1$ ne change pas non plus les performances du code.

Nous envisagerons ci-après le contrôle de puissance du terminal source et des terminaux relais. Le choix des coefficients $\mathbf{A_s}$ et $\alpha_k$ c'est-à-dire de la puissance d'émission $\mathbf{P_s}$ du terminal source et des gains d'amplification des différents terminaux relais peut être effectué selon deux modes distincts. On supposera tout d'abord que chaque terminal relais possède un contrôle de puissance en boucle ouverte maintenant le produit $\alpha_k h_{sr}^k$ à une valeur constante correspondant à une puissance d'émission constante $\mathbf{P_r}$, indépendante du relais.

Selon un premier mode, les puissances émises par le terminal source et les terminaux relais sont choisies telles que leur somme respecte le masque spectral FCC précité. Autrement dit, si P est la valeur de puissance permettant de respecter le masque spectral du FCC, on choisit les puissance respectives du terminal source et du terminal relais telles que la puissance totale source et relais moyennée sur un intervalle TTI soit égale à **P,** à savoir :

$$\frac{\left(KP_sT_f + KP_rT_f / 2\right)}{KT_f} = P_s + KP_r / 2 = P \qquad (14)$$

On comprend ainsi que le premier mode puisse permettre, pour un même BER, d'économiser la puissance du terminal source en la distribuant entre la source et les relais.

Selon un second mode, les puissances respectives du terminal source et des terminaux relais satisfont chacune au masque spectral du FCC. Dans ce cas, la puissance totale émise est (1+K/2) fois égale à celle qu'aurait émise le terminal source seul. Autrement dit, on pourra obtenir un même BER pour un rapport signal à bruit (1+ $K$/2) fois plus faible par rapport au premier mode de fonctionnement ou un fonctionnement sans relais.

Si l'on connaît les conditions des canaux $\mathbf{s - d}$ et $\mathbf{r_k - d}$ , par exemple les coefficients d'atténuation respectifs sur ces canaux, la répartition de puissance entre terminaux source et relais selon le premier mode peut aussi prendre en compte les conditions d'atténuation. Les puissances d'émission $P_s$ et $P_r^k$ respectives des terminaux s et $r_k$ sont alors choisies telles que :

$$P_s = a_s P \quad \text{et} \quad P_r^k = a_r^k P \qquad (15)$$

où les coefficients $a_s$ et $a_r^k$ vérifient :

$$a_s + \frac{1}{2} \sum_{k=1}^{K} a_r^k = 1 \qquad (16)$$

et sont déterminés par exemple en fonction des coefficients d'atténuation $h_{sd}$ et $h_{rd}^k$ relatifs respectivement aux trajets de propagation respectifs $\mathbf{s\text{-}d}$ et $\mathbf{r_k\text{-}d.}$

Les coefficients $a_s$ et $a_r^k$ peuvent alternativement être déterminés à partir de boucles fermées de contrôle de puissance d'émission (CL-PC pour Closed Loop Power Control). Pour ce faire, des indications de contrôle de puissance, $TPC_s$ et $TPC_r^k$ (Transmission Power Control) sont renvoyées via $K+1$ voies de retour vers les terminaux **s** et $r_k$. Cela suppose que l'on fasse périodiquement une détection séparée du signal direct émis par le terminal source et des signaux relayés par les terminaux $r_k$. En fonction des indications $\textbf{\textit{TPC}}_s$ et $TPC_r^k$, le terminal **s** décrémente/ incrémente $a_s$ et les terminaux incrémentent/ décrémentent $a_r^k$. Les indications sont déterminées conjointement de manière à ce que le budget total $a_s + \dfrac{1}{2}\displaystyle\sum_{k=1}^{K} a_r^k$ reste égal à 1.

Selon une variante correspondant à un fonctionnement selon le second mode, on peut prévoir des indications $TPC_s$ et $TPC_r^k$ indépendantes, les coefficients $a_s$ et $a_r^k$ n'étant plus liés mais restant chacun inférieur à 1 pour respecter le masque spectral.

La stratégie de coopération décrite ci-dessus fait appel à une pluralité $K$ de terminaux relais $r_1, r_2, .., r_K$ donnés. En règle générale cependant, plusieurs terminaux peuvent être candidats à la fonction de relais et il faut donc choisir $K$ terminaux parmi ces candidats, préalablement à l'établissement de la communication entre le terminal source et le terminal destinataire.

Selon une première variante de réalisation de l'invention, le choix des terminaux relais est effectué par concertation entre le terminal source s et le terminal destinataire $d$ sur la base d'un critère de proximité. On suppose que les terminaux peuvent déterminer les distances qui les séparent *(peer* to *peer ranging)* selon un moyen classique de calcul de pseudo distance ou de temps de propagation aller-retour. Les signaux UWB se prêtent bien par leur nature même (brèves impulsions temporelles) à une application de localisation. On trouvera par exemple une description d'une méthode de calcul de distances entre terminaux UWB dans l'article de Neiyer S. Correal et al. intitulé « An UWB relative location system » disponible sous le site www.ee.vt.edu.

La Fig. 4 représente schématiquement la procédure de sélection des terminaux relais. Les terminaux s et *d* déterminent tout d'abord la distance $\textbf{\textit{D}}_{s\text{-}d}$ qui les sépare. Le terminal s détermine ensuite l'ensemble $\textbf{S}_\textbf{s}$ de ses proches voisins : il calcule pour ce faire les distances qui le séparent des terminaux environnants et sélectionne ceux se situant à moins de $D_{s\text{-}d}$ de lui. Le terminal *d* détermine de même l'ensemble $S_d$ de ses proches voisins. Les terminaux relais $r_1, r_2, .., r_K$ sont sélectionnés dans l'ensemble $S_s \cap S_d$ comme ceux qui minimisent la somme $D_{s-r}^k + D_{r-d}^k$ où $D_{s-r}^k$ et $D_{r-d}^k$ sont les distances entre **s** *et* $r_k$ d' une part et $r_k$ et $d$ d'autre part. Si l'ensemble $S_s \cap S_d$ est vide, la procédure de coopération est abandonnée. Si l'ensemble $S_s \cap S_d$ contient un nombre $K' < K$ de terminaux, une stratégie de coopération à $K'$ relais peut être adoptée après concertation entre le terminal source et le terminal destinataire.

Selon une seconde variante de réalisation, les terminaux relais sont sélectionnés sur la base d'un critère de taux d'erreur (BER). Pour ce faire, le terminal source transmet une séquence prédéterminée de symboles de contrôle aux terminaux environnants. Cette séquence est connue de tous les terminaux et chaque terminal qui la reçoit peut ainsi déterminer son BER. Ceux dont le BER est inférieur à une valeur seuil renvoient alors un message d'acquittement au terminal source, spécifiant éventuellement la plage de taux d'erreur mesuré et/ou la charge du terminal. Le terminal source sélectionne les terminaux relais $r_k$ ayant reporté les plus faibles BER.

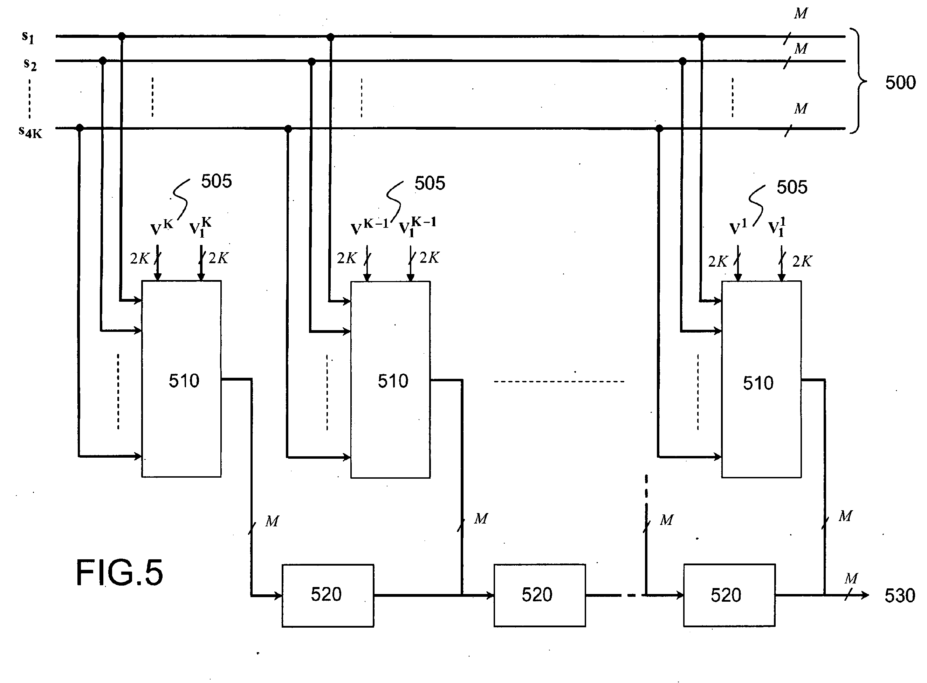

La Fig. 5 représente la structure générale d'un d'un terminal source selon un mode de réalisation de l'invention.

On a représenté en 500 le bus transportant les $\textbf{\textit{4K}}$ symboles d'information $\textbf{s}_1, \textbf{s}_2, ..., \textbf{s}_{\textbf{4K}}$, chaque symbole étant transporté sur $M$ fils correspondant aux $M$ composantes. Le terminal source comprend K modules 510 opérant en parallèle sur les 4K symboles d'information, chaque module 510 recevant un couple de vecteurs $\textbf{V}^\textbf{k}$, $\textbf{V}_\textbf{1}^\textbf{k}$ spécifiques, c'est-à-dire $\textbf{\textit{4K}}$ coefficients, préalablement stockés dans une mémoire, via un second bus 505 non détaillé. Un module 510 recevant les composantes des vecteurs $\textbf{V}^\textbf{k}$, $\textbf{V}_\textbf{1}^\textbf{k}$ fournit séquentiellement sur sa sortie les symboles de trans-

mission de la $k^{\text{ième}}$ trame dans l'ordre $c_2^k, c_4^k, c_1^k, c_3^k$. Les sorties des modules 510, hormis celles correspondant à **k = 1**, sont appliquées à **K - 1** lignes à retard 520 montées en série et possédant une valeur de retard égale à la durée trame $T_f = 4T_S$. Chaque ligne à retard est réalisée par exemple au moyen de $M$ registres à décalage opérant en parallèle, cadencés à la fréquence $1/T_S$ et de longueur 4. Ainsi, apparaissent successivement en sortie 530 les symboles de transmission $c_2^1, c_4^1, c_1^1, c_3^1$ de la première trame puis $c_2^2, c_4^2, c_1^2, c_3^2$ de la seconde trame et ainsi de suite jusqu'à $c_2^K, c_4^K, c_1^K, c_3^K$ pour la dernière trame de l'intervalle de transmission TTI.

Les symboles de transmission apparaissant en sortie 530 servent ensuite à moduler un signal UWB comme décrit en relation avec les expressions (9) et (9').

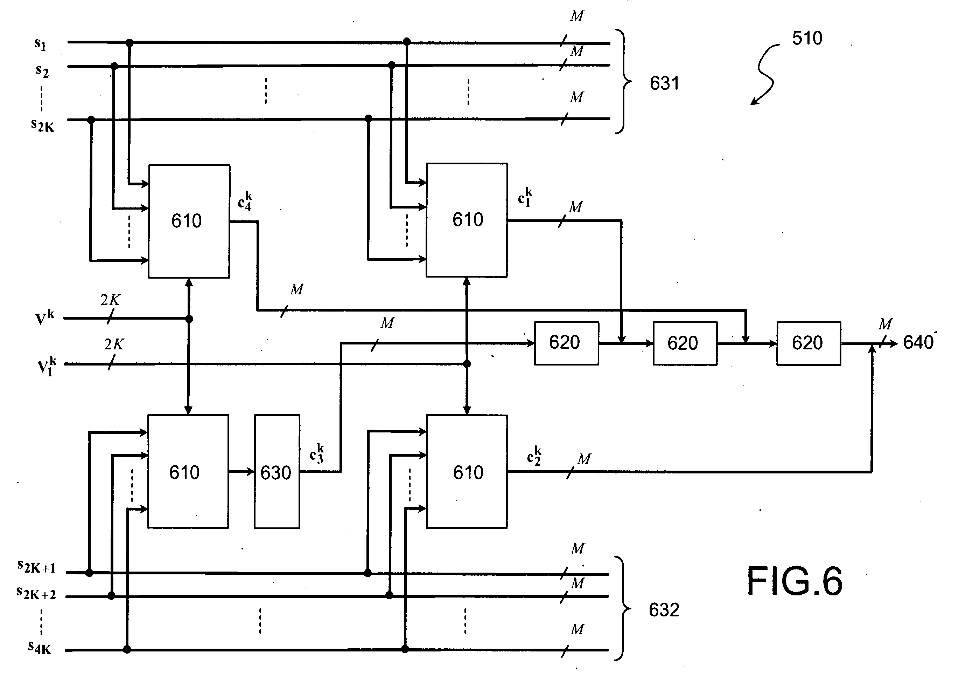

La Fig. 6 représente la structure générale d'un module 510 de la Fig. 5 et plus précisément du module 510 générant les symboles de transmission de la $k^{\text{ième}}$ trame. Comme déjà mentionné, ce module reçoit du bus 530 les symboles d'information $s_1, s_2, ..., s_{4K}$. Pour des raisons de commodité, on a représenté le bus en deux sous-bus 631 et 632 transportant respectivement les symboles $S_1, .., S_K, S_{K+1}, .., s_{2K}$ et $s_{2K+1}, .., s_{3K}, s_{3K+1}, .., s_{4K}$, c'est-à-dire $\sigma_{12}$ et $\sigma_{34}$.

Le module 510 comprend quatre sous-modules 610 de structure identique, deux de ces sous-modules recevant en entrée les symboles $s_1, .., s_K, s_{K+1}, .., s_{2K}$ et les deux autres les symboles $S_{2K+1}, .., S_{3K}, S_{3K+1}, .., S_{4K}$. Parmi les deux sous-modules 610 recevant les symboles $S_1, .., S_K, S_{K+1}, .., S_{2K}$, l'un reçoit un vecteur le vecteur $\mathbf{V}^k$ et génère le symbole $c_4^k$, l'autre le vecteur $V_1^k$ et génère le symbole $c_1^k$. De manière similaire, parmi les deux sous-modules 610 recevant les symboles $s_{2K+1}, .., s_{3K}, s_{3K+1}, .., s_{4K}$, l'un reçoit le vecteur $\mathbf{V}^k$ et l'autre le vecteur $V_1^k$. Celui recevant le vecteur $V_1^k$ génère le symbole $c_2^k$. Celui recevant le vecteur $\mathbf{V}^k$ génère un symbole dont les composantes PPM sont soumises à permutation et éventuellement à un changement de signe dans le sous-module 630. Le sous-module 630 génère le symbole $c_3^k$.

Le sous-module 610 fournissant le symbole $c_2^k$ est directement relié à la sortie 640 et les sorties des autres sous-modules sont reliées aux entrées respectives de trois lignes à retard 620 montées en série, chacune appliquant un retard identique égal au temps symbole $T_S$. Ainsi apparaissent successivement sur la sortie 640, les symboles de transmission $c_2^k, c_4^k, c_1^k, c_3^k$ en conformité avec la séquence de symboles illustrée en Fig. 2.

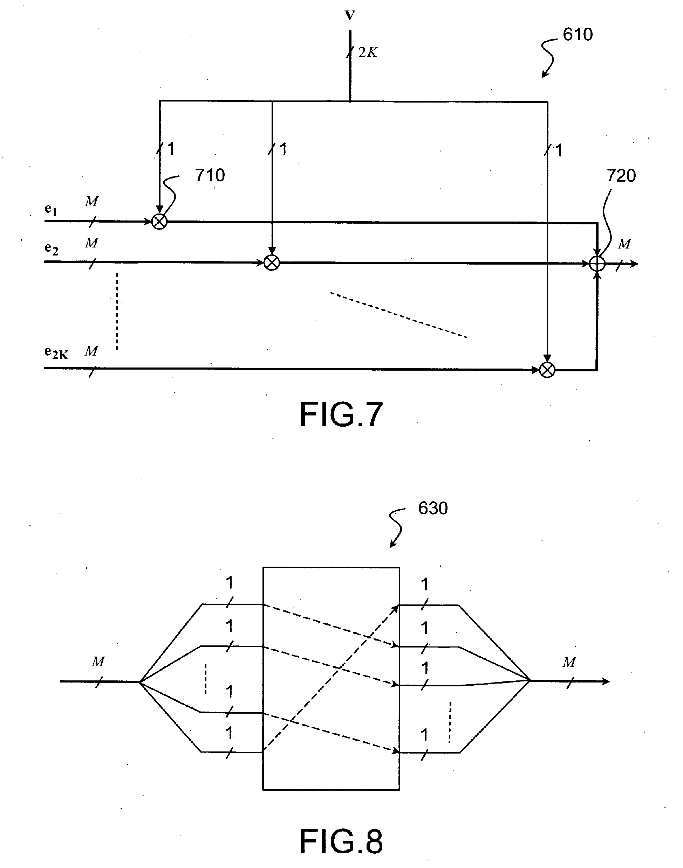

La Fig. 7 illustre schématiquement la structure d'un module 610. Il reçoit en entrée un vecteur **V** de dimension de **2K**, par exemple $\mathbf{V}^k$ ou $V_1^k$ et $2K$ vecteurs $e_1, ..., e_K, e_{K+1}, .., e_{2K}$ de dimension **M**, par exemple $s_1, .., s_K, s_{K+1}, .., s_{2K}$ ou $S_{2K+1}, .., s_{3K}, S_{3K+1}, .., s_{4K}$. Les **2K** composantes scalaires de V sont respectivement multipliées avec les vecteurs $e_1, ..., e_K, e_{K+1}, .., e_{2K}$ au moyen des multiplicateurs 710. Les vecteurs ainsi obtenus sont ensuite sommés par le sommateur 720.

La Fig. 8 illustre schématiquement la structure du sous-module 630 du module 510, selon un exemple de réalisation. Ce sous-module effectue l'opération de multiplication par la matrice $\Omega$, à savoir une permutation des **M** composantes d'entrée, éventuellement assortie d'un changement de signe d'une ou d'une pluralité de ces composantes. L'exemple illustré en Fig. 8 correspond à un simple décalage circulaire des composantes.

L'architecture du terminal source peut présenter de nombreuses variantes, notamment celles induites au sein des modules 510 par un échange des symboles de transmission $c_1^k$ et $c_4^k$ ou/et des symboles de transmission $c_2^k$ et $c_3^k$ dans le code spatio-temporel. Elles se traduisent par un échange/ des échanges d'embranchement en entrée des lignes à retard 620.

En outre, l'homme du métier conçoit que les opérations au sein des modules 510 d'une part et des sous-modules 610 d'autre part étant identiques, il est possible de choisir un autre compromis que celui proposé, entre traitement parallèle et traitement série. En particulier, on pourra opter pour un traitement massivement séquentiel en utilisant un seul module 610 et/ou un seul sous-module 510 par sous module 610, mais au prix toutefois d'un multiplexage des données en entrée et d'un démultiplexage des données en sortie, de manière connue de l'homme du métier.

Les signaux UWB émis par le terminal source pendant les premières demi-trames sont répétés par les terminaux relais dans les secondes demi-trames selon un protocole AF conventionnel. L'invention ne nécessite pas à cet égard une modification des terminaux relais.

Enfin, les signaux UWB émis par le terminal source, retransmis par les terminaux relais, peuvent être traités par un terminal destinataire de manière classique par un récepteur MIMO. Le récepteur pourra par exemple comprendre un étage de corrélation de type Rake suivi d'un étage de décision, utilisant par exemple un décodeur par sphère connu de l'homme du métier.

**Revendications**

1. Procédé de codage spatio-temporel distribué pour système de télécommunication UWB impulsionnel dans lequel un terminal source transmet un signal à un terminal destinataire pendant un intervalle de transmission constitué de $K$ trames, $K \geq 1$, chaque trame étant divisée en une première et une seconde demi-trames, le signal transmis dans chaque première demi-trame étant reçu puis retransmis après amplification pendant la seconde demi-trame suivante par un terminal relais distinct parmi $K$ terminaux relais dudit système, **caractérisé en ce que** ledit terminal source code **4$K$** symboles d'information appartenant à un alphabet de modulation PPM ou un alphabet de modulation composite PPM-PAM comprenant une pluralité de positions temporelles, pour fournir une séquence de quatre symboles de transmission par trame, lesdits symboles de transmission étant obtenus à partir de **4$K$** combinaisons linéaires desdits symboles d'information à l'aide d'une pluralité de coefficients appartenant à une extension algébrique réelle d'ordre **2$K$** du corps des rationnels et, pour un desdits symboles de transmission de rang déterminé dans ladite séquence de chaque trame, d'une permutation de ses composantes PPM; les symboles de transmission ainsi obtenus modulent un signal UWB impulsionnel.

2. Procédé de codage spatio-temporel distribué selon la revendication 1, **caractérisé en ce que** le symbole de transmission de chaque trame ayant subi une permutation de ses composantes PPM, est soumis en outre à une inversion de signe d'une ou d'une pluralité de ses composantes PPM.

3. Procédé de codage spatio-temporel distribué selon la revendication 1 ou 2, **caractérisé en ce que** les quatre symboles de transmission $\mathbf{c}_1^{\mathbf{k}}, \mathbf{c}_2^{\mathbf{k}}, \mathbf{c}_3^{\mathbf{k}}, \mathbf{c}_4^{\mathbf{k}}$ de la $k^{\text{ième}}$ trame de l'intervalle de transmission sont obtenus à partir des **4$K$** symboles d'information $\mathbf{s}_1, \mathbf{s}_2, ..., \mathbf{s}_{4K}$, de la manière suivante :

$$\mathbf{c}_1^{\mathbf{k}} = \sum_{i=1}^{K} v_i^k \mathbf{s}_{\mathbf{i}} + \theta \sum_{i=1}^{K} v_i^k \mathbf{s}_{\mathbf{K+i}}$$

$$\mathbf{c}_2^{\mathbf{k}} = \sum_{i=1}^{K} v_i^k \mathbf{s}_{\mathbf{2K+i}} + \theta \sum_{i=1}^{K} v_i^k \mathbf{s}_{\mathbf{3K+i}}$$

$$\mathbf{c}_3^{\mathbf{k}} = \Omega \left( \sum_{i=1}^{K} v_i^k \mathbf{s}_{\mathbf{2K+i}} + \theta_1 \sum_{i=1}^{K} v_i^k \mathbf{s}_{\mathbf{3K+i}} \right)$$

$$\mathbf{c}_4^k = \sum_{i=1}^{K} v_i^k \mathbf{s_i} + \theta_1 \sum_{i=1}^{K} v_i^k \mathbf{s_{K+i}}$$

où les $v_i^k$ , $\theta v_i^k$ , $\theta_1 v_i^k$ $i$=1,..,$K$ sont lesdits coefficients ; θ et $θ_1$ sont les racines conjuguées réelles d'un polynôme de degré 2 irréductible dans le corps des rationnels ; Ω est une opération de permutation des positions temporelles de l'alphabet PPM-PAM associée éventuellement à une inversion de signe d'une ou d'une pluralité des composantes PPM ;

la séquence transmise par le terminal source pendant ladite $k^{\text{ième}}$ trame étant $\mathbf{c}_2^k, \mathbf{c}_4^k, \mathbf{c}_1^k, \mathbf{c}_3^k$ ou

$\mathbf{c}_2^k, \mathbf{c}_1^k, \mathbf{c}_4^k, \mathbf{c}_3^k$ ou $\mathbf{c}_3^k, \mathbf{c}_4^k, \mathbf{c}_1^k, \mathbf{c}_2^k$ ou $\mathbf{c}_3^k, \mathbf{c}_1^k, \mathbf{c}_4^k, \mathbf{c}_2^k$ .

4. Procédé de codage spatio-temporel distribué selon la revendication 3, **caractérisé en ce que** $\theta = \dfrac{1+\sqrt{5}}{2}$ et

$\theta_1 = \dfrac{1-\sqrt{5}}{2}$ ou bien $\theta_1 = \dfrac{1+\sqrt{5}}{2}$ et $\theta = \dfrac{1-\sqrt{5}}{2}$ .

5. Procédé de codage spatio-temporel distribué selon la revendication 4 **caractérisé en ce que** $K$=1 et $v_1^1 = 1$ .

6. Procédé de codage spatio-temporel distribué selon la revendication 4 **caractérisé en ce que** K=2 et :

$$v_1^k = \frac{\sqrt{3-\phi_k}}{2} \quad \text{et} \quad v_2^k = \frac{\sqrt{3-\phi_k}}{2}\phi_k \quad \text{avec} \quad \phi_1 = 1+\sqrt{2} \quad \text{et} \quad \phi_2 = 1-\sqrt{2}$$

les coefficients $v_i^k$ étant définis à une permutation près sur les indices $i$ et/ou $k$ et leurs valeurs à un coefficient multiplicatif commun et à $\pm 10\%$ près.

7. Procédé de codage spatio-temporel distribué selon la revendication 4 **caractérisé en ce que** K=3 et :

$$v_1^k = \frac{-2+2\phi_k+3\phi_k^2}{7} \quad ; \quad v_2^k = \frac{6+\phi_k-2\phi_k^2}{7} \quad ; \quad v_3^k = \frac{3-3\phi_k-\phi_k^2}{7} \quad ;$$

avec $\phi_k = 2\cos\left(\dfrac{2\pi k}{7}\right)$ , les coefficients $v_i^k$ étant définis à une permutation près sur les indices $i$ et/ou $k$ et leurs valeurs à un coefficient multiplicatif commun et à $\pm 10\%$ près.

8. Procédé de codage spatio-temporel distribué selon la revendication 4 **caractérisé en ce que** $K$=4 et :

$$v_1^k = \sqrt{\frac{2 + 3\phi_k - \phi_k^2}{8}} \quad ; \quad v_2^k = \sqrt{\frac{2 - \phi_k}{8}} \quad ; \quad v_3^k = \sqrt{\frac{2 - 3\phi_k + \phi_k^2}{8}} \quad ; \quad v_4^k = \sqrt{\frac{2 + \phi_k}{8}}$$

avec $\phi_k = 2\cos\left(\frac{\pi k}{8}\right)$, les coefficients $v_i^k$ étant définis à une permutation près sur les indices i et/ou k et leurs valeurs à un coefficient multiplicatif commun et à $\pm 10\%$ près.

**9.** Procédé de codage spatio-temporel distribué selon la revendication 4 **caractérisé en ce que** K=5 et :

$$v_1^k = \frac{4 + 2\phi_k + 2\phi_k^2 - \phi_k^3}{11} \quad ; \quad v_2^k = \frac{15 - 2\phi_k - 12\phi_k^2 + \phi_k^3 + 3\phi_k^4}{11} \quad ;$$

$$v_3^k = \frac{6 - 7\phi_k + 4\phi_k^2 + 2\phi_k^3 - \phi_k^4}{11} \quad ; \quad v_4^k = \frac{8 + 7\phi_k + 5\phi_k^2 - 3\phi_k^3 - 2\phi_k^4}{11} \quad ;$$

$$v_5^k = \frac{7 + \phi_k^2 + \phi_k^3}{11} \quad \text{avec} \quad \phi_k = 2\cos\left(\frac{2\pi k}{11}\right),$$ les coefficients $v_i^k$ étant définis à une permutation près sur les indices *i* et/ou *k* et leurs valeurs à un coefficient multiplicatif commun et à $\pm 10\%$ près.

**10.** Procédé de codage spatio-temporel distribué selon l'une des revendications précédentes **caractérisé en ce que** ladite permutation des composantes PPM est une permutation circulaire.

**11.** Procédé de codage spatio-temporel distribué selon l'une des revendications précédentes, **caractérisé en ce que** les puissances de transmission du terminal source et des *K* terminaux relais sont choisies respectivement égales à $a_s P$ et $a_r^k P$, k=1,..,K où *P* une valeur de puissance respectant le masque spectral UWB et où $a_s$ et $a_r^k$ sont des coefficients tels que 0<$a_s$<1, $0 < a_r^k < 1$ et $a_s + \frac{1}{2}\sum_{k=1}^{K} a_r^k = 1$.

**12.** Procédé de codage spatio-temporel distribué selon la revendication 11, **caractérisé en ce que** les coefficients $a_s$ et $a_r^k$ sont déterminés en fonction des conditions respectives du canal de propagation entre le terminal source et le terminal destinataire et des canaux respectifs entre lesdits terminaux relais et le terminal destinataire.

**13.** Procédé de codage spatio-temporel distribué selon la revendication 11, **caractérisé en ce que** les coefficients $a_s$ et $a_r^k$ sont contrôlés au moyen de boucles de contrôle de puissance par *K*+1 voies de retour du terminal destinataire vers le terminal source et les ***K*** terminaux relais, respectivement.

**14.** Procédé de codage, spatio-temporel distribué selon l'une des revendications 1 à 10 **caractérisé en ce que** les puissances de transmission du terminal source et des terminaux relais sont choisies chacune égale à une valeur de puissance respectant le masque spectral UWB.

**15.** Procédé de codage spatio-temporel distribué selon l'une des revendications précédentes, **caractérisé en ce que** lesdits *K* terminaux relais sont déterminés par les terminaux source et destinataire au moyen des étapes suivantes :

- détermination de la distance séparant le terminal source et le terminal destinataire ;
- détermination d'un premier ensemble de terminaux situés à moins de ladite distance du terminal source ;
- détermination d'un second ensemble de terminaux situés à moins de ladite distance du terminal destinataire ;
- sélection des *K* terminaux relais parmi les terminaux communs auxdits premier et second ensembles, dits terminaux candidats, comme ceux minimisant la somme des distances entre le terminal source et le terminal candidat, d'une part, et le terminal candidat et le terminal destinataire, d'autre part.

**16.** Procédé de codage spatio-temporel distribué selon l'une des revendications 1 à 14, **caractérisé en ce que** lesdits *K* terminaux relais sont déterminés par les terminaux source et destinataire au moyen des étapes suivantes :

- détermination de la distance séparant le terminal source et le terminal destinataire ;
- détermination d'un premier ensemble de terminaux situés à moins de ladite distance du terminal source ;
- détermination d'un second ensemble de terminaux situés à moins de ladite distance du terminal destinataire ;
- détermination des terminaux communs auxdits premier et second ensembles, dits terminaux candidats, et envoi d'une séquence de symboles prédéterminés par le terminal source auxdits terminaux candidats, chaque terminal candidat détectant ladite séquence avec un taux d'erreur, les *K* terminaux relais étant sélectionnés comme les terminaux candidats détectant ladite séquence avec les *K* plus faibles taux d'erreur.

**17.** Dispositif de codage pour terminal de télécommunication UWB impulsionnel destiné à transmettre un signal à un terminal destinataire pendant un intervalle de transmission (TTI) constitué de *K* trames, $K \geq 1$ , **caractérisé en ce qu'**il comprend :

- des premiers moyens de distribution (500) pour fournir $4K$ symboles d'information appartenant à un alphabet de modulation PPM ou de modulation composite PPM-PAM comprenant *M* positions temporelles, à *K* modules de codage (510) en parallèle, chaque module de codage correspondant à une trame et opérant sur lesdits $4K$ symboles d'information pour fournir quatre symboles de transmission;
- des seconds moyens de distribution (505) pour fournir à chaque module de codage (510) un ensemble de $4K$ coefficients ($V^K, V_1{}^K$) appartenant à une extension algébrique réelle du corps des nombres rationnels ;
- chaque module de codage étant adapté à effectuer une combinaison linéaire desdits $4K$ symboles d'information au moyen des $4K$ coefficients qu'il reçoit et à effectuer une permutation des composantes PPM de l'un des symboles obtenus par combinaison ;
- une pluralité de lignes de retard (520) montées en série, chacune appliquant un retard égal à la durée trame et recevant sur son entrée la sortie d'un module de codage (510).

**18.** Dispositif de codage selon la revendication 17, **caractérisé en ce que** chaque module de codage (510) comprend quatre sous-modules de calcul (610) et que :

- lesdits premiers moyens de distribution (500) sont adaptés à fournir une première moitié ($s_1,...,s_K$, $s_{K+1},...,s_{2K}$) desdits symboles d'information à un premier et un quatrième desdits sous-modules et la seconde moitié ($s_{2K+1},...,s_{3K}, s_{3K+1},...s_{4K}$) desdits symboles d'information à un second et un troisième desdits sous-modules ;
- lesdits seconds moyens de distribution (505) sont adaptés à fournir une première moitié desdits coefficients ($V^k$) au premier et au second sous-modules et la seconde moitié des coefficients $(V_1^k)$ au troisième et au quatrième sous-modules ;
- un sous-module de permutation (630) adapté à effectuer une permutation des composantes PPM des symboles en sortie de l'un desdits sous-modules de calcul ;
- une pluralité de lignes à retard (620) montées en série, chacune appliquant un retard égal à la durée d'un symbole de transmission et recevant sur son entrée la sortie d'un desdits sous-modules de calcul (610) ou la sortie du sous-module de permutation (630).

**19.** Dispositif de codage selon la revendication 18, **caractérisé en ce que** ledit module de permutation (630) est en outre adapté à inverser le signe d'une ou d'une pluralité des composantes PPM des symboles qu'il reçoit.

**20.** Dispositif de codage selon la revendication 18 ou 19, **caractérisé en ce que** chaque sous-module de calcul (610) comprend des moyens de multiplication (710) pour multiplier respectivement chacun des 2*K* symboles d'information qu'il reçoit par un coefficient respectif parmi les 2*K* coefficients qu'il reçoit, et des moyens de sommation (720) pour sommer les 2*K* symboles ainsi obtenus.

**Claims**

**1.** Distributed space-time coding method for a UWB pulse telecommunication system in which a source terminal transmits a signal to a destination terminal during a transmission interval constituted by *K* frames, $K \geq 1$, each frame being divided into a first and a second half-frame, the signal transmitted in each first half-frame being received, then retransmitted after amplification during the next second half-frame by a distinct relay terminal among *K* relay terminals of said system, **characterised in that**
said source terminal codes 4*K* data symbols belonging to a PPM modulation alphabet or a composite PPM-PAM modulation alphabet including a plurality of time positions, so as to provide a sequence of four transmission symbols per frame, said transmission symbols being obtained from 4*K* linear combinations of said data symbols using a plurality of coefficients belonging to a real algebraic extension of 2*K* of the field of rational numbers and, for one of said transmission symbols of predetermined rank in said sequence of each frame, a permutation of its PPM components;
wherein the transmission symbols thus obtained modulate a UWB pulse signal.

**2.** Distributed space-time coding method according to claim 1, **characterised in that** the transmission symbol of each frame having undergone a permutation of its PPM components is also subjected to a sign inversion of one or more of its PPM components.

**3.** Distributed space-time coding method according to claim 1 or 2, **characterised in that** the four transmission symbols $\mathbf{c_1^k}, \mathbf{c_2^k}, \mathbf{c_3^k}, \mathbf{c_4^k}$ of the $k^{th}$ frame of the transmission interval are obtained from the **4*K*** data symbols $\mathbf{s_1, s_2, ..., s_{4K}}$, as follows:

$$\mathbf{c_1^k} = \sum_{i=1}^{K} v_i^k \mathbf{s_i} + \theta \sum_{i=1}^{K} v_i^k \mathbf{s_{K+i}}$$

$$\mathbf{c_2^k} = \sum_{i=1}^{K} v_i^k \mathbf{s_{2K+i}} + \theta \sum_{i=1}^{K} v_i^k \mathbf{s_{3K+i}}$$

$$\mathbf{c_3^k} = \Omega \left( \sum_{i=1}^{K} v_i^k \mathbf{s_{2K+i}} + \theta_1 \sum_{i=1}^{K} v_i^k \mathbf{s_{3K+i}} \right)$$

$$c_4^k = \sum_{i=1}^{K} v_i^k s_i + \theta_1 \sum_{i=1}^{K} v_i^k s_{K+i}$$

where the $v_i^k$, $\theta v_i^k$, $\theta_1 v_i^k$ $i = 1,..,K$ are said coefficients; $\theta$ and $\theta_1$ are the real conjugated roots of a polynomial of degree 2 irreducible in the field of the rational numbers, $\Omega$ is a permutation operation of the time positions of the PPM-PAM alphabet possibly associated with a sign inversion of one or more PPM components;

wherein the sequence transmitted by the source terminal during said $k^{th}$ frame is $c_2^k, c_4^k, c_1^k, c_3^k$ or

$c_2^k, c_1^k, c_4^k, c_3^k$ or $c_3^k, c_4^k, c_1^k, c_2^k$ or $c_3^k, c_1^k, c_4^k, c_2^k$.

4. Distributed space-time coding method according to claim 3, **characterised in that** $\theta = \dfrac{1+\sqrt{5}}{2}$ and

$\theta_1 = \dfrac{1-\sqrt{5}}{2}$ or $\theta_1 = \dfrac{1+\sqrt{5}}{2}$ and $\theta = \dfrac{1-\sqrt{5}}{2}$.

5. Distributed space-time coding method according to claim 4, **characterised in that** $K = 1$ and $v_1^1 = 1$.

6. Distributed space-time coding method according to claim 4, **characterised in that** $K = 2$ and:

$$v_1^k = \frac{\sqrt{3-\phi_k}}{2} \quad \text{and} \quad v_2^k = \frac{\sqrt{3-\phi_k}}{2}\phi_k \quad \text{with} \quad \phi_1 = 1+\sqrt{2} \quad \text{and} \quad \phi_2 = 1-\sqrt{2}$$

wherein the coefficients $v_i^k$ are defined up to a permutation on the indices $i$ and/or $k$ and their values are defined up to a common multiplication coefficient, within $\pm 10\%$.

7. Distributed space-time coding method according to claim 4, **characterised in that** $K = 3$ and:

$$v_1^k = \frac{-2+2\phi_k+3\phi_k^2}{7} \; ; \quad v_2^k = \frac{6+\phi_k-2\phi_k^2}{7} \; ; \quad v_3^k = \frac{3-3\phi_k-\phi_k^2}{7} \; ;$$

with $\phi_k = 2\cos\left(\dfrac{2\pi k}{7}\right)$, wherein the coefficients $v_i^k$ are defined up to a permutation on the indices $i$ and/or $k$ and their values are defined up to a common multiplication coefficient, within $\pm 10\%$.

8. Distributed space-time coding method according to claim 4, **characterised in that** $K = 4$ and:

$$v_1^k = \sqrt{\frac{2 + 3\phi_k - \phi_k^2}{8}} \quad ; \quad v_2^k = \sqrt{\frac{2 - \phi_k}{8}} \quad ; \quad v_3^k = \sqrt{\frac{2 - 3\phi_k + \phi_k^2}{8}} \quad ;$$

$$v_4^k = \sqrt{\frac{2 + \phi_k}{8}}$$

with $\phi_k = 2\cos\left(\dfrac{\pi k}{8}\right)$, wherein the coefficients $v_i^k$ are defined up to a permutation on the indices $i$ and/or $k$ and their values are defined up to a common multiplication coefficient, within $\pm 10\%$.

**9.** Distributed space-time coding method according to claim 4, **characterised in that** $K = 5$ and:

$$v_1^k = \frac{4 + 2\phi_k + 2\phi_k^2 - \phi_k^3}{11} ; \quad v_2^k = \frac{15 - 2\phi_k - 12\phi_k^2 + \phi_k^3 + 3\phi_k^4}{11} ;$$

$$v_3^k = \frac{6 - 7\phi_k + 4\phi_k^2 + 2\phi_k^3 - \phi_k^4}{11} ; \quad v_4^k = \frac{8 + 7\phi_k + 5\phi_k^2 - 3\phi_k^3 - 2\phi_k^4}{11} ;$$

$$v_5^k = \frac{7 + \phi_k^2 + \phi_k^3}{11} \text{ with } \phi_k = 2\cos\left(\frac{2\pi k}{11}\right) \quad ,\text{ wherein the coefficients } v_i^k \text{ are defined up to a permu-}$$

tation on the indices $i$ and/or $k$ and their values are defined up to a common multiplication coefficient, within $\pm 10\%$.

**10.** Distributed space-time coding method according to one of the previous claims, **characterised in that** said permutation of the PPM components is a circular permutation.

**11.** Distributed space-time coding method according to one of the previous claims, **characterised in that** the transmission powers of the source terminal and the $K$ relay terminals are chosen so as to be respectively equal to $a_s P$ and $a_r^k P$, $k = 1,..,K$ where $P$ is a power value complying with the UWB spectral mask and where $a_s$ and $a_r^k$ are coefficients such that $0 < a_s < 1$, $0 < a_r^k < 1$ and $a_s + \dfrac{1}{2}\displaystyle\sum_{k=1}^{K} a_r^k = 1$.

**12.** Distributed space-time coding method according to claim 11, **characterised in that** the coefficients $a_s$ and $a_r^k$ are determined according to respective conditions of the propagation channel between the source terminal and the destination terminal, and respective channels between said relay terminals and the destination terminal.

**13.** Distributed space-time coding method according to claim 11, **characterised in that** the coefficients $a_s$ and $a_r^k$ are controlled by means of power control loops by $K+1$ return paths from the destination terminal to the source terminal and the $K$ relay terminals, respectively.

**14.** Distributed space-time coding method according to one of claims 1 to 10, **characterised in that** the transmission powers of the source terminal and the relay terminals are each chosen so as to be equal to a power value complying with the UWB spectral mask.

**15.** Distributed space-time coding method according to one of the previous claims, **characterised in that** said $K$ relay terminals are determined by the source and destination terminals by means of the following steps:

- determination of the distance separating the source terminal and the destination terminal;
- determination of a first set of terminals located at less than said distance from the source terminal;
- determination of a second set of terminals located at less than said distance from the destination terminal;
- selection of the $K$ relay terminals from the terminals common to said first and second sets, called candidate terminals, as those minimising the sum of the distances between the source terminal and the candidate terminal, and between the candidate terminal and the destination terminal.

**16.** Distributed space-time coding method according to one of claims 1 to 14, **characterised in that** said $K$ relay terminals are determined by the source and destination terminals by means of the following steps:

- determination of the distance separating the source terminal and the destination terminal;
- determination of a first set of terminals located at less than said distance from the source terminal;
- determination of a second set of terminals located at less than said distance from the destination terminal;
- determination of the terminals common to said first and second sets, called candidate terminals, and sending of a sequence of predetermined symbols by the source terminal to said candidate terminals, wherein each candidate terminal detects said sequence with an error rate, and the $K$ relay terminals are selected as candidate terminals detecting said sequence with the $K$ lowest error rates.

**17.** Coding method for a UWB pulse telecommunication terminal intended to transmit a signal to a destination terminal during a transmission interval (TTI) constituted by $K$ frames, $K \geq 1$, **characterised in that** it includes:

- first distribution means (500) for providing $4K$ data symbols belonging to a PPM modulation alphabet or a composite PPM-PAM modulation alphabet including $M$ time positions, to $K$ coding modules (510) in parallel, with each coding module corresponding to a frame and operating on said $4K$ data symbols to provide four transmission symbols;
- second distribution means (505) for providing each coding module (510) with a set of $4K$ coefficients ($\mathbf{V^K, V_1^K}$) belonging to a real algebraic extension of the field of rational numbers;
- each coding module being adapted to perform a linear combination of said $4K$ data symbols by means of the $4K$ coefficients that it receives, and to perform a permutation of the PPM components of one of the symbols obtained by combination;
- a plurality of delay lines (520) mounted in series, each applying a delay equal to the frame duration and receiving, at its input, the output of a coding module (510).

**18.** Coding device according to claim 17, **characterised in that** each coding module (510) includes four calculation sub-modules (610) and **in that**:

- said first distribution means (500) are adapted to provide a first half ($\mathbf{s_1,...,s_K, s_{K+1}...s_{2K}}$) of said data symbols to a first and a fourth of said sub-modules and the second half ($\mathbf{s_{2K+1},..,s_{3K}, s_{3K+1},..,s_{4K}}$) of said data symbols to a second and a third of said sub-modules;
- said second distribution means (505) are adapted to provide a first half of said coefficients ($\mathbf{V^k}$) to the first and second sub-modules and the second half of the coefficients $\left( \mathbf{V_1^k} \right)$ to the third and fourth sub-modules;
- a permutation sub-module (630) adapted to perform a permutation of the PPM components of the symbols at the output of one of said calculation sub-modules;
- a plurality of delay lines (620) mounted in series, each applying a delay equal to the duration of a transmission symbol and receiving, at its input, the output of one of said calculation sub-modules (610) or the output of the permutation sub-module (630).

**19.** Coding device according to claim 18, **characterised in that** said permutation module (630) is also suitable for reversing the sign of one or more PPM components of the symbols that it receives.

20. Coding device according to claim 18 or 19, **characterised in that** each calculation sub-module (610) includes multiplication means (710) for respectively multiplying each of the $2K$ data symbols that it receives by a respective coefficient among the $2K$ coefficients that it receives, and summing means (720) for summing the $2K$ symbols thus obtained.

**Patentansprüche**

1. Verfahren zur verteilten Raum-Zeit-Codierung für ein UWB-Pulstelekommunikationssystem, in dem ein Quellenterminal während eines Übertragungsintervalls, das durch K Blöcke mit K≥1 gebildet ist, ein Signal zu einem Zielterminal überträgt, wobei jeder Block in einen ersten und einen zweiten Halbblock unterteilt ist, wobei das in jedem ersten Halbblock übertragene Signal während des anschließenden zweiten Halbblocks von einem gesonderten Relaisterminal aus K Relaisterminals des Systems empfangen und anschließend weiter übertragen wird, **dadurch gekennzeichnet, dass**

   das Quellenterminal $4K$ Informationssymbole codiert, die zu einem Alphabet der Modulation PPM oder einem Alphabet der Verbundmodulation PPM-PAM gehören, umfassend eine Mehrzahl von zeitlichen Positionen, um eine Sequenz von vier Übertragungssymbolen pro Block zu liefern, wobei die Übertragungssymbole erhalten werden ausgehend von $4K$ Linearkombinationen der Informationssymbole mittels einer Mehrzahl von Koeffizienten, die zu einer reellen algebraischen Erweiterung der Ordnung $2K$ des Körpers der rationalen Zahlen gehören und, für eines der Übertragungssymbole bestimmten Rangs in der Sequenz jedes Blocks, mittels einer Permutation seiner PPM-Komponenten;
   und dass die derart erhaltenen Übertragungssymbole ein UWB-Pulssignal modulieren.

2. Verfahren zur verteilten Raum-Zeit-Codierung nach Anspruch 1, **dadurch gekennzeichnet, dass** das Übertragungssymbol jedes Blocks, das eine Permutation seiner PPM-Komponenten erfahren hat, ferner einer Vorzeichenumkehr einer oder einer Mehrzahl seiner PPM-Komponenten unterworfen wird.

3. Verfahren zur verteilten Raum-Zeit-Codierung nach Anspruch 1 oder 2, **dadurch gekennzeichnet, dass** die vier Übertragungssymbole $c_1^k, c_2^k, c_3^k, c_4^k$ des k-ten Blocks des Übertragungsintervalls auf die folgende Weise ausgehend von den $4K$ Informationssymbolen $s_1, s_2, ..., s_{4k}$ erhalten werden:

$$c_1^k = \sum_{i=1}^{K} v_i^k s_i + \theta \sum_{i=1}^{K} v_i^k s_{K+i}$$

$$c_2^k = \sum_{i=1}^{K} v_i^k s_{2K+i} + \theta \sum_{i=1}^{K} v_i^k s_{3K+i}$$

$$c_3^k = \Omega \left( \sum_{i=1}^{K} v_i^k s_{2K+i} + \theta_1 \sum_{i=1}^{K} v_i^k s_{3K+i} \right)$$

$$c_4^k = \sum_{i=1}^{K} v_i^k s_i + \theta_1 \sum_{i=1}^{K} v_i^k s_{K+i}$$

wobei die $v_i^k$, $\theta v_i^k$, $\theta_1 v_i^k$ mit i=1,...,K die Koeffizienten sind; wobei θ und θ₁ die reellen konjugierten Wurzeln eines irreduziblen Polynoms zweiten Grades im Körper der rationellen Zahlen sind; Ω eine Operation zur Permutation der zeitlichen Positionen des Alphabets PPM-PAM ist, die eventuell einer Vorzeichenumkehr einer oder mehrerer der PPM-Komponenten zugeordnet ist;

die Sequenz, die vom Quellenterminal während des k-ten Blocks übertragen wird, $c_2^k, c_4^k, c_1^k, c_3^k$ oder

$c_2^k, c_1^k, c_4^k, c_3^k$ oder $c_3^k, c_4^k, c_1^k, c_2^k$ oder $c_3^k, c_1^k, c_4^k, c_2^k$ ist.

4.  Verfahren zur verteilten Raum-Zeit-Codierung nach Anspruch 3,

**dadurch gekennzeichnet, dass** $\theta = \dfrac{1+\sqrt{5}}{2}$ und $\theta_1 = \dfrac{1-\sqrt{5}}{2}$ oder aber $\theta_1 = \dfrac{1+\sqrt{5}}{2}$ und

$\theta = \dfrac{1-\sqrt{5}}{2}$ ist.

5.  Verfahren zur verteilten Raum-Zeit-Codierung nach Anspruch 4, **dadurch gekennzeichnet, dass** *K*=1 und

$v_1^1 = 1$.

6.  Verfahren zur verteilten Raum-Zeit-Codierung nach Anspruch 4, **dadurch gekennzeichnet, dass** *K*=2 und:

$$v_1^k = \frac{\sqrt{3-\phi_k}}{2} \text{ und } v_2^k = \frac{\sqrt{3-\phi_k}}{2}\phi_k \text{ mit } \phi_1 = 1+\sqrt{2} \text{ und } \phi_2 = 1-\sqrt{2}$$

wobei die Koeffizienten $v_i^k$ bis auf eine Permutation bei den Indices *i* und/oder *k* definiert sind, und ihre Werte bis auf einen gemeinsamen multiplikativen Koeffizienten und bis auf ±10 % definiert sind.

7.  Verfahren zur verteilten Raum-Zeit-Codierung nach Anspruch 4, **dadurch gekennzeichnet, dass** K=3 und:

$$v_1^k = \frac{-2+2\phi_k+3\phi_k^2}{7} \quad ; \quad v_2^k = \frac{6+\phi_k-2\phi_k^2}{7} \quad ; \quad v_3^k = \frac{3-3\phi_k-\phi_k^2}{7} \quad ;$$

mit $\phi_k = 2\cos\left(\dfrac{2\pi k}{7}\right)$, wobei die Koeffizienten $v_i^k$ definiert sind bis auf eine Permutation bei den Indices *i* und/oder *k*, und ihre Werte bis auf einen gemeinsamen multiplikativen Koeffizienten und bis auf ±10 %.

**8.** Verfahren zur verteilten Raum-Zeit-Codierung nach Anspruch 4, **dadurch gekennzeichnet, dass** $K$=4 und:

$$v_1^k = \sqrt{\frac{2+3\phi_k - \phi_k^2}{8}} \quad ; \quad v_2^k = \sqrt{\frac{2-\phi_k}{8}} \quad ; \quad v_3^k = \sqrt{\frac{2-3\phi_k+\phi_k^2}{8}} \; ; \quad v_4^k = \sqrt{\frac{2+\phi_k}{8}}$$

mit $\phi_k = 2\cos\left(\dfrac{\pi k}{8}\right)$, wobei die Koeffizienten $v_i^k$ definiert sind bis auf eine Permutation bei den Indices $i$ und/oder $k$, und ihre Werte bis auf einen gemeinsamen multiplikativen Koeffizienten und bis auf $\pm 10$ %.

**9.** Verfahren zur verteilten Raum-Zeit-Codierung nach Anspruch 4, **dadurch gekennzeichnet, dass** K=5 und:

$$v_1^k = \frac{4+2\phi_k+2\phi_k^2-\phi_k^3}{11} \quad ; \quad v_2^k = \frac{15-2\phi_k-12\phi_k^2+\phi_k^3+3\phi_k^4}{11} \quad ;$$

$$v_3^k = \frac{6-7\phi_k+4\phi_k^2+2\phi_k^3-\phi_k^4}{11} \quad ; \quad v_4^k = \frac{8+7\phi_k+5\phi_k^2-3\phi_k^3-2\phi_k^4}{11} \quad ;$$

$$v_5^k = \frac{7+\phi_k^2+\phi_k^3}{11}$$ mit $\phi_k = 2\cos\left(\dfrac{2\pi k}{11}\right)$, wobei die Koeffizienten $v_i^k$ definiert sind bis auf eine Permutation bei den Indices $i$ und/oder $k$, und ihre Werte bis auf einen gemeinsamen multiplikativen Koeffizienten und bis auf $\pm 10$ %.

**10.** Verfahren zur verteilten Raum-Zeit-Codierung nach einem der vorhergehenden Ansprüche, **dadurch gekennzeichnet, dass** die Permutation der PPM-Komponenten eine zirkulare Permutation ist.

**11.** Verfahren zur verteilten Raum-Zeit-Codierung nach einem der vorhergehenden Ansprüche, **dadurch gekennzeichnet, dass** die Übertragungsleistungen des Quellenterminals und der $K$ Relaisterminals gleich $a_s P$ beziehungsweise $a_r^k P$, mit $k = 1,...,K$ gewählt werden, wobei $P$ ein Leistungswert ist, der die spektrale UWB-Maske berücksichtigt, und wobei $a_s$ und $a_r^k$ Koeffizienten derart sind, dass $0 < a_s < 1$, und $0 < a_r^k < 1$ und $a_s + \dfrac{1}{2}\sum_{k=1}^{K} a_r^k = 1$.

**12.** Verfahren zur verteilten Raum-Zeit-Codierung nach Anspruch 11, **dadurch gekennzeichnet, dass** die Koeffizienten $a_s$ und $a_r^k$ bestimmt werden als Funktion der jeweiligen Bedingungen des Ausbreitungskanals zwischen dem Quellenterminal und dem Zielterminal und der jeweiligen Kanäle zwischen den Relaisterminals und dem Zielterminal.

**13.** Verfahren zur verteilten Raum-Zeit-Codierung nach Anspruch 11, **dadurch gekennzeichnet, dass** die Koeffizienten $a_s$ und $a_r^k$ kontrolliert werden mit Hilfe von Leistungskontrollschleifen auf $K$+1 Rückwegen vom Zielterminal zum Quellenterminal bzw. zu den *K* Relaisterminals.

**14.** Verfahren zur verteilten Raum-Zeit-Codierung nach einem der Ansprüche 1 bis 10, **dadurch gekennzeichnet, dass** die Übertragungsleistungen des Quellenterminals und der Relaisterminals jeweils gleich einem Leistungswert gewählt werden, der die spektrale UWB-Maske berücksichtigt.

**15.** Verfahren zur verteilten Raum-Zeit-Codierung nach einem der vorhergehenden Ansprüche, **dadurch gekennzeichnet, dass** die *K* Relaisterminals durch das Quellenterminal und das Zielterminal mit Hilfe der folgenden Schritte bestimmt werden:

- Bestimmung des Abstands, der das Quellenterminal und das Zielterminal voneinander trennt;
- Bestimmung einer ersten Gruppe von Terminals, die um mindestens diesen Abstand vom Quellenterminal entfernt liegen;
- Bestimmung einer zweiten Gruppe von Terminals, die um mindestens diesen Abstand vom Zielterminal entfernt liegen;
- Auswahl der K Relaisterminals aus denjenigen Terminals, die der ersten und der zweiten Gruppe gemeinsam sind, genannt Kandidatenterminals, als jene, die die Summe der Abstände zwischen dem Quellenterminal und dem Kandidatenterminal einerseits und dem Kandidatenterminal und dem Zielterminal andererseits minimieren.

**16.** Verfahren zur verteilten Raum-Zeit-Codierung nach einem der Ansprüche 1 bis 14, **dadurch gekennzeichnet, dass** die K Relaisterminals durch das Quellenterminal und das Zielterminal mit Hilfe der folgenden Schritte bestimmt werden:

- Bestimmung des Abstands, der das Quellenterminal und das Zielterminal voneinander trennt;
- Bestimmung einer ersten Gruppe von Terminals, die um mindestens diesen Abstand vom Quellenterminal entfernt liegen;
- Bestimmung einer zweiten Gruppe von Terminals, die um mindestens diesen Abstand vom Zielterminal entfernt liegen;
- Bestimmung der Terminals, die der ersten und der zweiten Gruppe gemeinsam sind, genannt Kandidatenterminals, und Schicken einer Sequenz vorbestimmter Symbole vom Quellenterminal zu den Kandidatenterminals, wobei jedes Kandidatenterminal die Sequenz mit einer Fehlerrate erfasst, wobei die K Relaisterminals als diejenigen Kandidatenterminals ausgewählt werden, die die Sequenz mit den K schwächsten Fehlerraten erfassen.

**17.** Codiergerät für ein UWB-Pulskommunikationsterminal, das dazu bestimmt ist, während eines Übertragungsintervalls (TTI) das durch K Blöcke mit $K \geq 1$ gebildet ist, ein Signal zu einem Zielterminal zu übertragen, **dadurch gekennzeichnet, dass** es umfasst:

- erste Verteilungsmittel (500) zum Liefern von 4$K$ Informationssymbolen, die zu einem Alphabet der Modulation PPM oder der Verbundmodulation PPM-PAM gehören, umfassend *M* zeitliche Positionen, parallel an *K* Codiermodule (510), wobei jedes Codiermodul einem Block entspricht und mit den 4$K$ Informationssymbolen operiert, um vier Übertragungssymbole zu liefern;
- zweite Verteilungsmittel (505), um jedem Codiermodul (510) eine Gruppe von 4$K$ Koeffizienten $(\mathbf{V^k}, \mathbf{V_1^k})$ zu liefern, die zu einer reellen algebraischen Erweiterung des Körpers der rationalen Zahlen gehören;
- wobei jedes Codiermodul dazu ausgelegt ist, eine Linearkombination der 4K Informationssymbole mittel 4$K$ Koeffizienten durchzuführen, die es empfängt und eine Permutation der PPM-Komponenten eines der Symbole durchzuführen, das durch Kombination erhalten wird;
- eine Mehrzahl von Verzögerungslinien (520), die in Reihe angeschlossen sind, wobei jede eine Verzögerung gleich der Blockdauer anwendet und an ihrem Eingang die Ausgabe eines Codiermoduls (510) empfängt.

**18.** Codiergerät nach Anspruch 17, **dadurch gekennzeichnet, dass** jedes Codiermodul (510) 4 Rechenuntermodule (610) umfasst, und dass:

- die ersten Verteilungsmittel (500) dazu ausgelegt sind, eine erste Hälfte $(\mathbf{s_1}, ... \mathbf{s_K}, \mathbf{s_{K+1}}, .... \mathbf{s_{2k}})$ der Informationssymbole an ein erstes und ein viertes der Untermodule und die zweite Hälfte $(\mathbf{s_{2k+1}}, ... \mathbf{s_{3k+1}}, ... \mathbf{s_{4k}})$ der Informationssymbole an ein zweites und ein drittes der Untermodule zu liefern;
- die zweiten Verteilungsmittel (505) dazu ausgelegt sind, eine erste Hälfte der Koeffizienten $(\mathbf{V^k})$ an das erste und an das zweite Untermodul und die zweite Hälfte der Koeffizienten $(\mathbf{V_1^K})$ an das dritte und an das vierte Untermodul zu liefern;

- ein Permutations-Untermodul (630) dazu ausgelegt ist, eine Permutation der PPM-Komponenten der Symbole am Ausgang eines der Rechenuntermodule durchzuführen;
- eine Mehrzahl von Verzögerungslinien (620) in Reihe angeschlossen ist, wobei jede eine Verzögerung gleich der Dauer eines Übertragungssymbols anwendet und an ihrem Eingang die Ausgabe eines der Rechenuntermodule (610) oder die Ausgabe des Permutationsuntermoduls (630) empfängt.

19. Codiergerät nach Anspruch 18, **dadurch gekennzeichnet, dass** das Permutationsmodul (630) ferner dazu ausgelegt ist, das Vorzeichen einer oder einer Mehrzahl der PPM-Komponenten der Symbole zu invertieren, die es empfängt.

20. Codiergerät nach Anspruch 18 oder 19, **dadurch gekennzeichnet, dass** jedes Rechenuntermodul (610) Multiplikationsmittel (710) umfasst, um jeweils jedes der $2K$ Informationssymbole, die es empfängt, mit einem jeweiligen Koeffizienten aus den $2K$ Koeffizienten zu multiplizieren, die es empfängt, sowie Summationsmittel (720) zum Summieren der derart erhaltenen $2K$ Symbole.

FIG.1

FIG.2

FIG.3

FIG.4

FIG.5

EP 1 865 613 B1

FIG.6

EP 1 865 613 B1

FIG.7

FIG.8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- On the achievable diversity-multiplexing tradeoff in half-duplex cooperative channels. *IEEE Trans. on Information Theory,* Décembre 2005, vol. 51 (12), 4152-4172

- **C. ABOU-RJEILY et al.** Distributed algebraic space time codes for ultra wideband communications. Kluwer